# EUROPEAN PATENT SPECIFICATION

(11) **EP 1 373 018 B1**
(45) Date of publication and mention of the grant of the patent: **21.06.2006**
(21) Application number: 01961650.7
(22) Date of filing: 17.07.2001
(51) Int. Cl.: B60T 7/04, G05G 1/14

(54) **ADJUSTABLE PEDAL APPARATUS WITH DEFINED ADJUSTMENT PATH**
EINSTELLBARE PEDALVORRICHTUNG MIT DEFINIERTEM EINSTELLWEG
DISPOSITIF DE PEDALE REGLABLE A VOIE DE REGLAGE DEFINIE

(30) Priority: 07.12.2000 US 254016 P
(43) Date of publication of application: 02.01.2004
(73) Proprietor: Grand Haven Stamped Products, Grand Haven, MI 49417 (US)
(72) Inventor: FISHER, Daniel, J., West Olive, MI 49460 (US)
(74) Representative: Miller, James Lionel Woolverton
(86) International application number: PCT/US2001/022421
(87) International publication number: WO 2002/045999

(56) References cited:
- EP-A- 1 120 700
- EP-A- 1 143 322
- DE-A- 19 923 697
- US-A- 3 691 868
- US-A- 5 010 782
- US-A- 5 086 663
- US-A- 5 460 061

## Description

### BACKGROUND OF INVENTION

The present invention relates to under-dash pedal systems for vehicle control, and more particularly relates to adjustable foot pedals that are adjustable relative to a seated person in a vehicle for optimal positioning and function.

Adjustable foot pedal systems for control of vehicles are known. For example, see U.S. Patent 3,828,625. However, improvements are desired to allow linear adjustment of the pedals so that a location of the pedals to the vehicle floor and to the driver can be more appropriately controlled. For example, it is desirable to adjust the pedals in a manner that is most similar to adjusting a vehicle seat, since linearly adjusting a vehicle seat relative to foot pedals is widely accepted by the public and government regulators. However, a problem may result if the pedals are linearly adjusted because, with conventional thinking, this requires that the actuators (e.g. push rods, cables, and mechanical linkages) connecting the pedals to the associated vehicle components (e.g. a master brake cylinder, an engine throttle, or a clutch) be lengthened or shortened as the pedals are adjusted. Some designers are hesitant to make a length of actuators adjustable, because this can introduce play, wear, and reduced reliability into the actuator. Nonetheless, there are potential cost savings if foot pedals are made adjustable instead of a vehicle seat being adjustable on a floor pan of the vehicle. Also, there are potential safety improvements related to airbag deployment that will occur by keeping a seat relatively stationary and pedals adjustable.

Even if the above challenges are overcome, the adjustable pedal system must be able to meet certain functional criteria. For example, the braking pedal must be able to withstand significant torsional stress that occurs during hard braking of the vehicle. Further, the accelerator and brake pedal systems should preferably position the accelerator pedal and the brake pedal at the same relative positions after an adjustment, so that the driver does not mis-hit or have other problems when quickly switching from one pedal to the other. At the same time, the accelerator and brake pedal systems must be relatively simple, reliable, and very durable for long use. Another problem is caused by horizontally/rearwardly extending and protruding objects. It is undesirable to incorporate such protruding objects under an instrument panel or dash where they can cause leg and knee injury during a vehicle crash. Also, there is not much room under an instrument panel, such that any pedal system must take up a minimum of space. DE19923697A discloses an adjustable pedal apparatus according to the preamble of claim 1. Accordingly, an apparatus solving the aforementioned problems and having the aforementioned advantages is desired.

### SUMMARY OF THE INVENTION

In a first aspect of the present invention defined in claim 1, an adjustable pedal apparatus includes an upper portion adapted for attachment to a vehicle support, a lower lever portion supporting a pedal pad, and an adjustment mechanism connecting the upper and lower portions. The adjustment mechanism includes a curved track, and a follower slidably engaging the track to define a virtual pivot spaced away from the track so that the pedal pad follows a predetermined path as the follower is slidably adjusted along the curved track. By this arrangement, the follower travels a shorter distance than the pedal pad during adjustment of the adjustment mechanism.

Preferably the adjustable pedal apparatus includes a support configured for attachment to a vehicle and a pedal-supporting subassembly. The pedal-supporting subassembly includes an upper portion pivotally engaging the support, a lower portion supporting a pedal construction, and an adjustment mechanism connecting the upper and lower portions. The adjustment mechanism includes a curved track, and a follower slidably engaging the track. An adjuster for adjusting the pedal construction includes a rack extending along the track and attached to one of the track and the pedal construction, and further includes a driven gear operably supported on the other of the track and the pedal construction for operably engaging the rack to adjust the pedal construction along the track. The adjustment mechanism further includes a drive cable attached to the driven gear for rotating the driven gear. By this arrangement, the follower travels a shorter distance than movement of the pedal during adjustment of the adjustment mechanism.

In another aspect of the present invention defined in claim 20 a method comprises steps of providing an adjustable pedal construction that includes structure defining a virtual pivot and a pedal construction supported for movement about the virtual pivot, and pivoting the pedal construction about the virtual pivot.

These and other features, advantages, and objects of the present invention will be further understood and appreciated by those skilled in the art by reference to the following specification, claims, and appended drawings:

### BRIEF DESCRIPTION OF THE DRAWINGS

Fig. 1 is an exploded perspective of an adjustable pedal apparatus embodying the present invention;
Figs. 2 and 3 are perspective views of the brake pedal subassembly shown in Fig. 1;

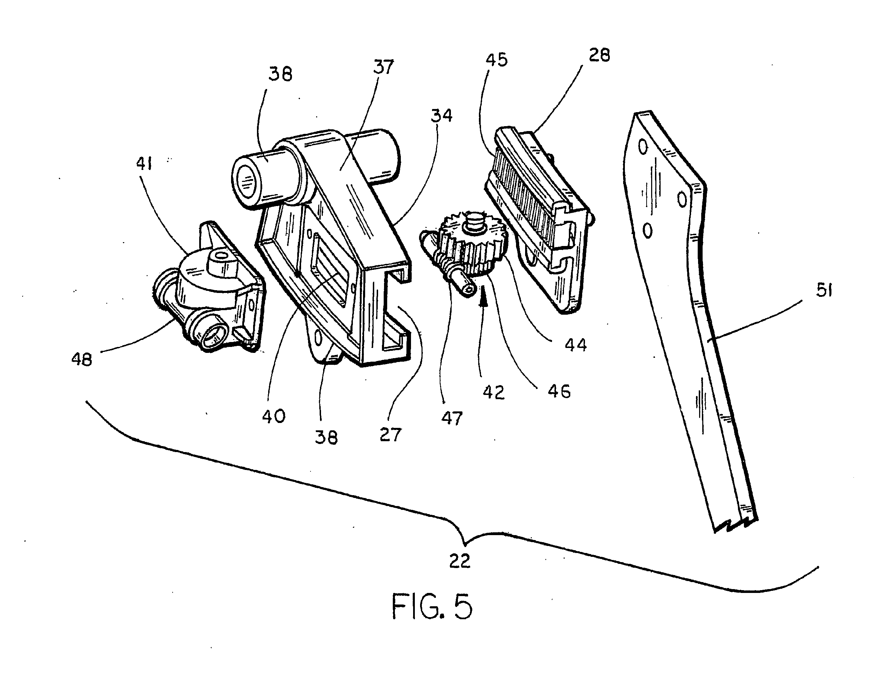

Figs. 4 and 5 are exploded perspective views of the pedal subassembly shown in Figs. 2 and 3, respectively;

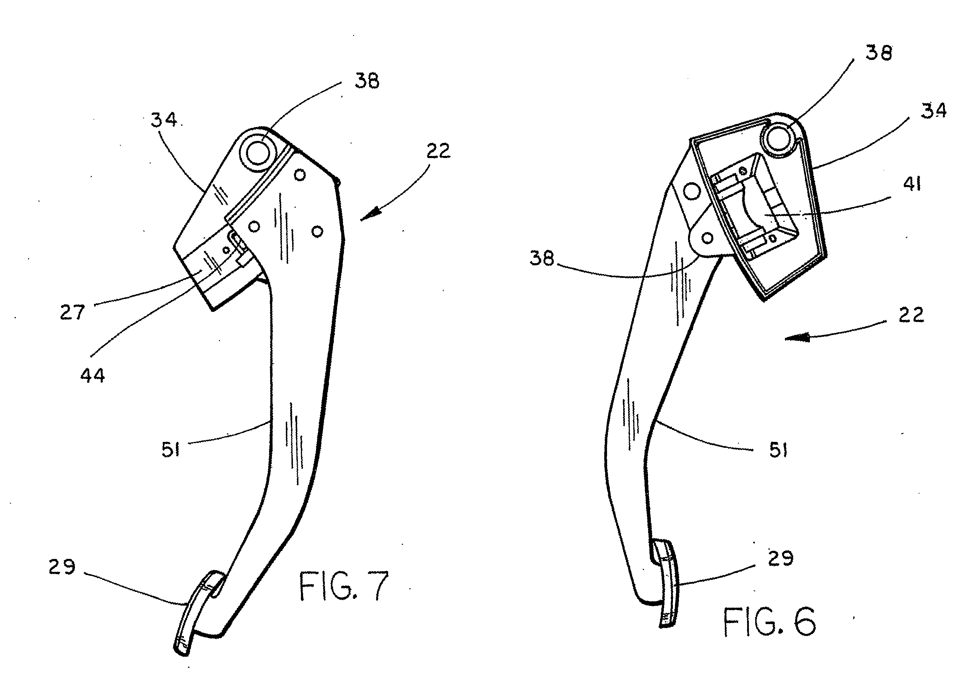

Figs. 6 and 7 are side views of the accelerator pedal subassembly shown in Fig. 2; and
Fig. 8 is a perspective view of the brake pedal subassembly shown in Fig. 2, but showing a path of the pedal during adjustment about a first virtual pivot point.

### DETAILED DESCRIPTION OF PREFERRED EMBODIMENT

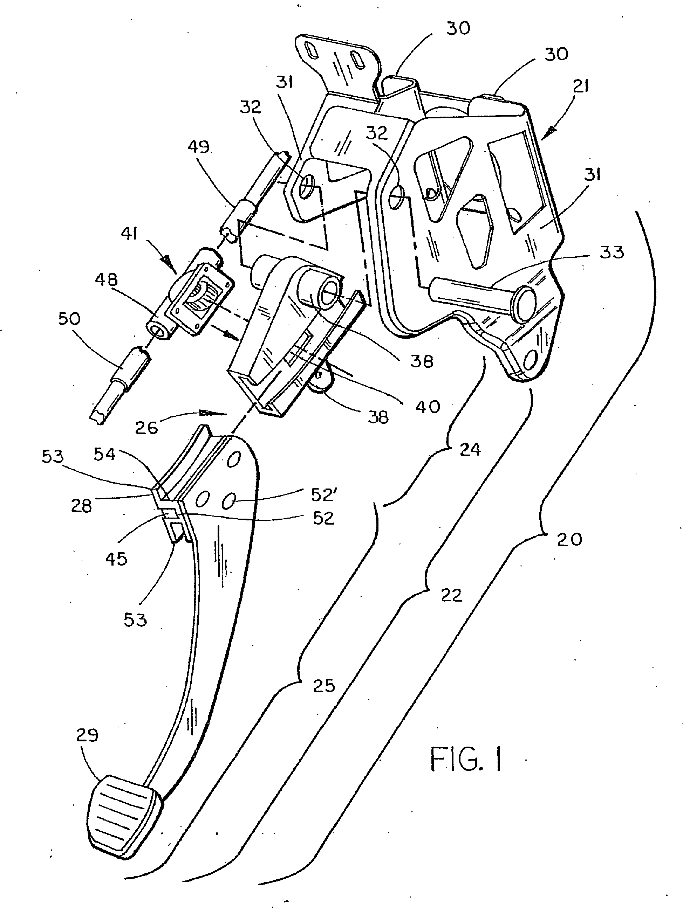

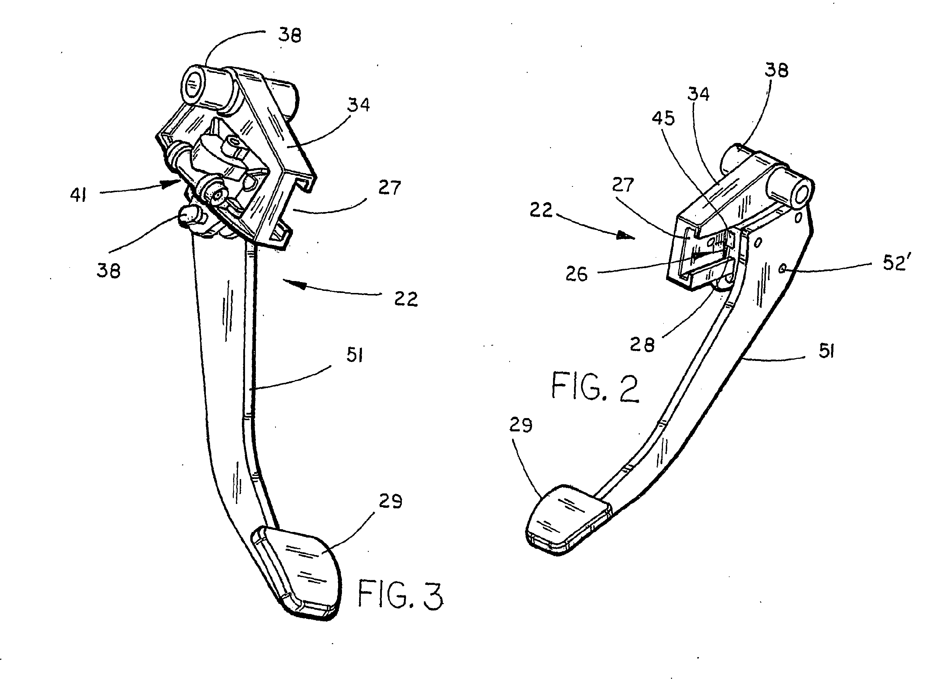

A pedal-supporting apparatus 20 (Fig. 1) includes a bracket support 21 configured for attachment to a vehicle firewall under the vehicle's instrument panel, and a brake pedal subassembly 22 (Fig. 2) pivoted to the support 21. Though a brake pedal subassembly is illustrated, it is contemplated that the present invention could be used on any vehicle pedal system. The brake pedal subassembly 22 includes an upper portion 24 pivotally engaging the support 21 (Fig. 1), and a lever portion 25 coupled to the upper portion 24 by an adjustment device 26. The adjustment device 26 includes a longitudinally curved track or channel 27 attached to the upper portion 24, and a hat-shaped follower 28 on the lever portion 25. The follower 28 includes blade-shaped curved edges operably engaging the track 27. The curved track 27 defines an arcuate path particularly shaped to cause the lever portion 25 to pivot about a virtual pivot strategically located well above the adjustment device 26, such that the brake pedal pad 29 moves along a predetermined path that optimally positions the pedal pad 29 for large-bodied vehicle drivers (when in a far-from-the-driver, forwardly-adjusted position) and for small bodied vehicle drivers (when in a close-to-the-driver, rearwardly-adjusted position). The arcuate track 27 results in a shorter track, since the movement of the pedal pad is magnified over the movement of the follower 28. By this arrangement, the total volumetric package size of the adjustment device 26 and also of the upper portion 24 is considerably smaller than adjustable pedal systems where the track is linear, since less travel of the adjustment device itself is needed. This also results in substantial advantages in terms of a more compact assembly, smaller parts, reduced weight, and a safety improvement in terms of less elongated protruding components under a vehicle dash. At the same time, the curved track defines a virtual pivot instead of an actual pivot, which has advantages since the curved track can be located at a lower position without requiring structure at the location of the virtual pivot.

The bracket support 21 (Fig. 1) includes apertured flanges 30 for attachment to a vehicle firewall. The support 21 further includes sidewalls 31 optimally designed for strength and light weight. Holes 32 are provided in sidewalls 31 for receiving a pivot pin 33. The sidewalls 31 are constructed with bends, apertures, and reinforcement ribs to provide optimal strength and low weight. It is noted that support 21 can be a stamped metal part, a die-cast part, or a molded plastic component.

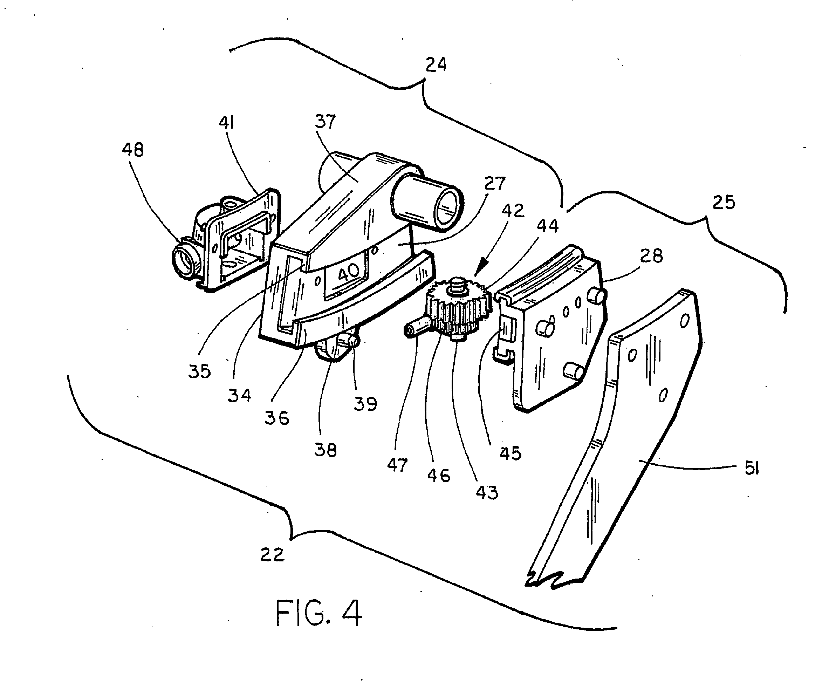

The upper portion 24 (Fig. 4) of the subassembly 22 includes a body 34 with L-shaped arcuate flanges 35 and 36 on one side defining the track 27 between them. A top section 37 of the body 34 extends above the top flange 35 and supports a transverse cylindrical section or pivot mount 38 for receiving pivot pin 33. The cylindrical section 38 has a length chosen to fill the space between the sidewalls 31 (Fig. 1), and has a diameter to closely but rotatably receive the pivot pin 33.

A flange 38 (Fig. 4) extends downwardly from the body 34 and includes a connector 39 for connection to a push rod such as for operating a master brake cylinder of a vehicle braking system. Such push rods are well known in the art, and need not be described in detail herein for an understanding by a person skilled in this art.

An opening 40 is cut through body 34 at a location generally in the longitudinal center of the track 27. A housing 41 is screw-attached to a side of the body 34 opposite the flanges 35 and 36. A gear member 42 is positioned in the housing 41 and rotatably supported by an axle 43. The gear member 42 includes a first drive gear 44 that extends through the opening 40 and operably engaged with a rack 45 in the follower 28 as described below, and includes a second gear 46 positioned beside the first gear 44 and also supported on the axle 43. A worm gear 47 is rotatably supported in the housing 41 by cylindrical section 48 at a 90-degree orientation from the axis of the second gear 46 and operably engages the second gear 46. A motor-driven cable 49 (Fig. 1) is attached to the worm gear 47 and is attached to a rotatable shaft of a DC reversible electric motor, such as are sometimes used in vehicles. When the motor is rotated, the worm gear 47 engages the second gear 46, causing the first gear 44 to rotate, engage the rack 45, and move the follower 28 along the track 27.

The worm gear 47 includes an exposed tail end configured to be engaged by a second cable 50, such that the second cable 50 is rotated at the same time and in the same direction as the first cable 49 when the motor is operated. It is contemplated that the second cable 50 can be extended to a second adjustable pedal apparatus similar to apparatus 20. By this means, multiple adjustable pedal apparatus can be simultaneously adjusted.

The lever portion 25 includes a lever 51 attached to the hat-shaped follower 28 by rivets 52' (or by welding, or other means). The pedal pad 29 is attached to a lower end of the lever 51. The follower 28 is "hat" shaped, and includes a center wall 52, arcuate edge flanges 53 that mateably slidably engage the recesses formed under the L-shaped flanges 35 and 36, and transverse walls 54 that connect the edge flanges 53 to the center wall 52. Plastic bearing caps (see Fig. 4) and lubricant can be used on flanges 35 and 36 to reduce friction and provide uniform sliding movement, but it is noted that some frictional resistance is desired to help prevent undesired adjustment movement.

To adjust the pedal subassembly, the motor is operated to rotate cable 49 and in turn rotate gears 47 and 44 of gear member 42, thus moving follower 28 and lever portion 25 along the arcuate track 27. To use the brake pedal, the vehicle driver presses on the pedal pad 29, causing the lever portion 25 and the upper portion 23 to pivot as a unit about pivot pin 33, thus pushing the push rod toward the master brake cylinder.

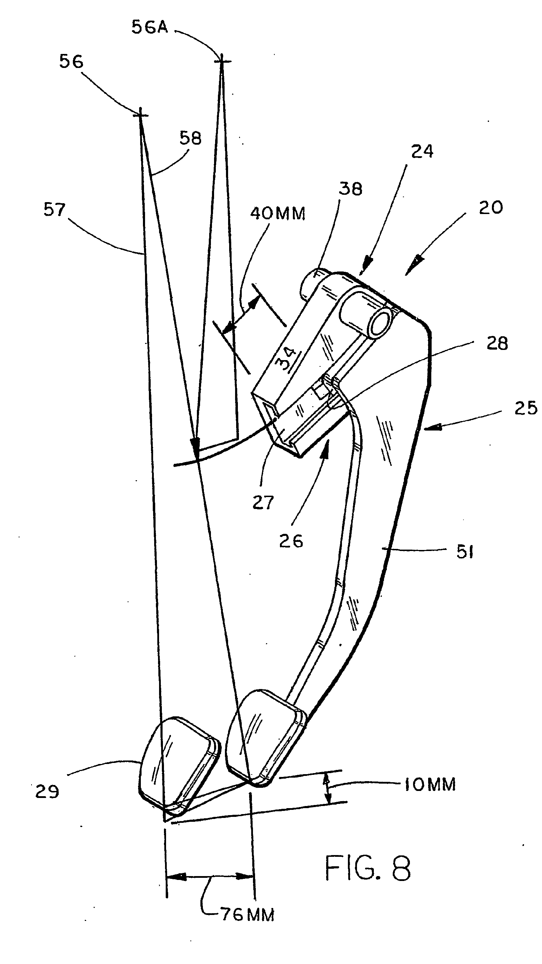

Notably, the curved adjustment device 26 (Fig. 8) (i.e. track 27 and follower 28) defines a virtual pivot 56 that is substantially above the track 27. As illustrated, the radius 57 that extends between the virtual pivot 56 and the pedal pad 29 is about 326 mm, and the radius 58 to a centerline on the track 27 is about half that distance. Also, the virtual pivot 56 is located rearward (i.e. toward the vehicle driver) from the adjustment device 26. As a result, when the follower 28 moves 40 mm in an arcuate forward direction (toward a vehicle driver), the pedal pad 29 moves along a predetermined arcuate path that is 76 mm toward the vehicle driver and 10 mm lower. This results in an optimal position of the pedal pad 29 relative to the vehicle floor pan, both when the pedal pad 29 is adjusted to its forward position 59 (optimal for large bodied persons) and when adjusted to its rearward position 60 (optimal for small bodied persons). It is to be understood that different virtual pivot points can be designed into the present device. For example, the virtual pivot 56A illustrates a second location directly above the track 27, which results in the pedal pad 29 moving through an arcuate path segment of about 76 mm where the front and rear positions of the pedal pad 29 are about equal in height. Thus, different vehicle manufacturer specifications can be easily met. Importantly, the chordal longitudinal length of edge flanges 53 of the follower 28 and their engagement with the L-shaped flanges 35 and 36 results in a mechanically advantageous arrangement capable of withstanding substantial torques. This is important because at least one manufacturer specifies that the pedal construction must withstand 1334·4N (300 pounds) of force at the brake pad 29. Translating this force through the long torque arm of lever portion 25 to pivot pin 33 and back to the track 27 results in over 8896N (2000 pounds) of force on the flanges 35 and 36. Thus, length of engagement by the edge flanges 53 on the L-shaped flanges 35 and 36 is important for sufficient torsional strength. In the present arrangement, a chordal length of track 27 that is about 110 mm and a follower length that is about 55 mm provides the necessary strength while still meeting the small volumetric size requirements of most vehicle manufacturers for this device. This compares to a linear track that would have to be about 160 mm or longer in order to provide similar pedal travel and torsional resistance.

The body 34 is a one-piece body with flanges 35 and 36 integrally formed from the contiguous and continuous material of a main portion of the body 34. Consistent with this, it is contemplated that the body 34 can be made by casting or molding into a near-final net shape, or by machining the body 34, and can be made of metal, polymeric, a composite or a combination of materials.

In the foregoing description, those skilled in the art will readily appreciate that modifications may be made to the invention without departing from the scope of the invention as laid down in the appended claims.

## Claims

1. An adjustable pedal apparatus comprising:
an upper portion (24) adapted for attachment to a vehicle support (21);
a lower lever portion (25) supporting a pedal pad (29); and
an adjustment mechanism (26) connecting the upper and lower portions, the adjustment mechanism (26) including a curved track (27) and a follower (28) slidably engaging the track (27) to define a virtual pivot (56) spaced away from the track (27) so that the pedal pad (29) follows a predetermined path as the follower (28) is slidably adjusted along the curved track (27), whereby the follower (28) travels a shorter distance than the pedal pad (29) during adjustment of the adjustment mechanism (26); wherein the follower (28) includes a row of teeth (45), the adjustment mechanism (26) includes gearing, and **characterized in that** the adjustment mechanism (26) includes a three-dimensional one-piece body (34) defining a first side of the track (27) and integrally-formed flanges (35,36) forming another side of the track (27), the body further including a window (40), for receiving and operably supporting the gearing adjacent the track (27) so that the gearing operably engages the row of teeth (45) for causing the follower (28) to move along the track (27).

2. The pedal apparatus defined in claim 1, wherein one of the upper portion (24) and the adjustment mechanism (26) includes a pivot for pivotally supporting the lower portion (25) and pedal pad (29).

3. The pedal apparatus defined in claim 2, wherein the upper portion (24) includes the pivot and wherein the pivot is adapted to pivotally support an assembly of the upper portion (24), the lower portion (25), and the adjustment mechanism (26).

4. The pedal apparatus defined in claim 1, wherein the curved track (27) is attached to the upper portion (24) and the follower (28) is attached to the lower portion (25).

5. The pedal apparatus defined in claim 1, wherein the curved track (27) includes a body with at least one curved flange (35, 36) defining an arcuate section of the track (27).

6. The pedal apparatus defined in claim 5, wherein the at least one curved flange (35, 36) includes opposing curved flanges.

7. The pedal apparatus defined in claim 5, wherein the curved track (27) is elongated and comprises a curved channel.

8. The pedal apparatus defined in claims 1 or 5, wherein the curved track (27) defines a radius that is longer than a total vertical height of an assembly of the upper and lower portions.

9. The pedal apparatus defined in claims 1 or 5, wherein a ratio of movement of the pedal pad (29) to the follower (28) is 2:1.

10. The pedal apparatus defined in claim 1, wherein the adjustment mechanism (26) includes a row of teeth on the follower (28) and further includes a drive mechanism with gearing operably supported on the track (27) and adapted to be driven by an actuator cable, the gearing operably engaging the row of teeth for motivating the follower (28) selectively along the track (27).

11. The pedal apparatus defined in claim 1, including a second upper portion adapted for attachment to the vehicle support (21); a second lower lever portion supporting a second pedal pad; and a second adjustment mechanism connecting the second upper and lower portions, the second adjustment mechanism including a second track and a second follower slidably engaging the second track.

12. The pedal apparatus defined in claim 11, wherein the second track defines a second virtual pivot spaced away from the second track so that the second pedal pad follows a second predetermined path as the second follower is slidably adjusted along the second track.

13. The pedal apparatus defined in claim 11, wherein the second track includes second opposing flanges defining the second track, and wherein the second follower is hat-shaped and includes opposing flanges with bearing material thereon that is shaped to slidably engage the opposing flanges.

14. The pedal apparatus defined in claim 13, including a drive cable operably connecting the first and second drive mechanisms.

15. The pedal apparatus defined in claim 2, wherein the integrally formed flanges are made of continuous and contiguous material of the body and form a C-shaped transverse cross section with the body, with the track (27) being a longitudinally-extending cavity formed within the C-shaped cross section.

16. The pedal apparatus defined in claim 15, wherein the one-piece body comprises a solid mass of material capable of being heated and flowed into a near-final net shape.

17. The pedal apparatus defined in claim 15, wherein the one-piece body comprises a solid mass of material capable of being molded or cast, and thereafter cooled into a final shape.

18. The pedal apparatus defined in claim 15, wherein the track (27) defines a known radius at least as great as a length of the lower portion (25).

19. The pedal apparatus defined in claim 15, wherein the track (27) defines a known radius greater than a total length of the lower portion (25) and the upper portion and that positions the virtual pivot (56) above the upper portion (24).

20. A method of operating an adjustable pedal apparatus comprising steps of:
providing an adjustable pedal construction that includes structure defining a virtual pivot (56) and a pedal construction supported for movement about the virtual pivot (56); and
pivoting the pedal construction about the virtual pivot (56), wherein the structure includes a track (27) and the pedal construction including a follower (28) operably engaging the track (27) and also including a pedal pad (29), and wherein a ratio of movement of the pedal pad (29) to the follower (28) is 2:1 when the pedal construction is pivoted about the virtual pivot (56); wherein the follower (28) includes a row of teeth (45), and wherein the adjustment mechanism (26) includes a three-dimensional one-piece body (34) defining a first side of the track (27) and integrally-formed flanges (35,36) forming another side of the track (27), the adjustment mechanism (26) including gearing and the body further including a window (40) for receiving and operably supporting the gearing adjacent the track (27) so that the gearing operably engages the row of teeth (45) for causing the follower (28) to move along the track (27).

## Patentansprüche

1. Einstellbare Pedalvorrichtung, welche aufweist:
einen oberen Teil (24), der für eine Befestigung an einer Fahrzeughalterung (21) ausgebildet ist;
einen unteren Hebelteil (25), der eine Pedalplatte (29) trägt; und
einen Einstellmechanismus (26), der die oberen und unteren Teile verbindet, wobei der Einstellmechanismus (26) eine gekrümmte Spur (27) und ein Gleitstück (28), das in die Spur (27) verschiebbar eingreift, enthält, um einen virtuellen Drehpunkt (56) festzulegen, der von der Spur (27) beabstandet ist, so dass die Pedalplatte (29) einem vorbestimmten Weg folgt, wenn das Gleitstück (28) verschiebbar entlang der gekrümmten Spur (27) verstellt wird, wobei das Gleitstück (28) während einer Einstellung des Einstellmechanismus (26) eine geringere Strecke zurücklegt als die Pedalplatte (29); wobei das Gleitstück (28) eine Zahnreihe (45) enthält, der Einstellmechanismus (26) ein Getriebe enthält, und **dadurch gekennzeichnet, dass** der Einstellmechanismus (26) einen dreidimensionalen einteiligen Körper (34) enthält, der eine erste Seite der Spur (27) festlegt, und einteilig geformte Flansche (35, 36), die eine andere Seite der Spur (27) formen, wobei der Körper weiters ein Fenster (40) enthält, zum Aufnehmen und wirksam Unterstützen des Getriebes, das der Spur (27) benachbart ist, so dass das Getriebe wirksam in die Zahnreihe (45) eingreift, um das Gleitstück (28) zu veranlassen, sich entlang der Spur (27) zu bewegen.

2. Pedalvorrichtung nach Anspruch 1, wobei einer von dem oberen Teil (24) und dem Einstellmechanismus (26) einen Drehpunkt enthält, um den unteren Teil (25) und die Pedalplatte (29) schwenkbar zu lagern.

3. Pedalvorrichtung nach Anspruch 2, wobei der obere Teil (24) den Drehpunkt enthält, und wobei der Drehpunkt ausgebildet ist, eine Einheit von dem oberen Teil (24), dem unteren Teil (25) und dem Einstellmechanismus (26) schwenkbar zu lagern.

4. Pedalvorrichtung nach Anspruch 1, wobei die gekrümmte Spur (27) an dem oberen Teil (24) befestigt ist und das Gleitstück (28) an dem unteren Teil (25) befestigt ist.

5. Pedalvorrichtung nach Anspruch 1, wobei die gekrümmte Spur (27) einen Körper mit zumindest einem gekrümmten Flansch (35, 36) enthält, der einen bogenförmigen Abschnitt der Spur (27) festlegt.

6. Pedalvorrichtung nach Anspruch 5, wobei der zumindest eine gekrümmte Flansch (35, 36) gegenüberliegende gekrümmte Flansche enthält.

7. Pedalvorrichtung nach Anspruch 5, wobei die gekrümmte Spur (27) langgestreckt ist und einen gekrümmten Kanal aufweist.

8. Pedalvorrichtung nach Anspruch 1 oder 5, wobei die gekrümmte Spur (27) einen Radius festlegt, der länger ist, als die vertikale Gesamthöhe einer Einheit der oberen und unteren Teile.

9. Pedalvorrichtung nach Anspruch 1 oder 5, wobei das Bewegungsverhältnis von der Pedalplatte (29) zu dem Gleitstück (28) 2:1 ist.

10. Pedalvorrichtung nach Anspruch 1, wobei der Einstellmechanismus (26) eine Zahnreihe auf dem Gleitstück (28) enthält und weiters einen Antriebsmechanismus enthält mit einem Getriebe, das wirksam auf der Spur (27) gelagert ist, und ausgebildet ist, von einem Stellkabel angetrieben zu werden, wobei das Getriebe in die Zahnreihe wirksam eingreift, um das Gleitstück (28) auswählbar entlang der Spur (27) anzuregen.

11. Pedalvorrichtung nach Anspruch 1, welche folgendes enthält: einen zweiten oberen Teil, der für eine Befestigung an der Fahrzeughalterung (21) ausgebildet ist; einen zweiten unteren Hebelteil, der eine zweite Pedalplatte trägt; und einen zweiten Einstellmechanismus, der die zweiten oberen und unteren Teile verbindet, wobei der zweite Einstellmechanismus eine zweite Spur und ein zweites Gleitstück, das in die zweite Spur verschiebbar eingreift, enthält.

12. Pedalvorrichtung nach Anspruch 11, wobei die zweite Spur einen zweiten virtuellen Drehpunkt festlegt, der von der zweiten Spur beabstandet ist, so dass die zweite Pedalplatte einem zweiten vorbestimmten Weg folgt, wenn das zweite Gleitstück verschiebbar entlang der zweiten Spur eingestellt wird.

13. Pedalvorrichtung nach Anspruch 11, wobei die zweite Spur zweite gegenüberliegende Flansche enthält, die die zweite Spur festlegen, und wobei das zweite Gleitstück hutförmig ist und gegenüberliegende Flansche enthält, mit einem Lagerwerkstoff darauf, der geformt ist, um in die gegenüberliegenden Flansche verschiebbar einzugreifen.

14. Pedalvorrichtung nach Anspruch 13, welche ein Antriebskabel enthält, das die ersten und zweiten Antriebsmechanismen wirksam verbindet.

15. Pedalvorrichtung nach Anspruch 2, wobei die einteilig geformten Flansche aus durchgehendem und zusammenhängendem Material des Körpers hergestellt sind und einen C-förmigen durchlaufenden Querschnitt mit dem Körper formen, wobei die Spur (27) ein sich längsverlaufend erstreckender Hohlraum ist, der innerhalb des C-förmigen Querschnitts gebildet wird.

16. Pedalvorrichtung nach Anspruch 15, wobei der einteilige Körper eine feste Masse von Werkstoff aufweist, der fähig ist, erhitzt zu werden und in eine Endform nahe der endgültigen zu fließen.

17. Pedalvorrichtung nach Anspruch 15, wobei der einteilige Körper eine feste Masse von Werkstoff aufweist, der fähig ist, geformt oder gegossen zu werden, und danach in eine endgültige Form abgekühlt zu werden.

18. Pedalvorrichtung nach Anspruch 15, wobei die Spur (27) einen bekannten Radius festlegt, der zumindest so groß wie eine Länge des unteren Teils (25) ist.

19. Pedalvorrichtung nach Anspruch 15, wobei die Spur (27) einen bekannten Radius festlegt, der größer ist, als eine Gesamtlänge des unteren Teils (25) und des oberen Teils, und der den virtuellen Drehpunkt (56) oberhalb des oberen Teils (24) positioniert.

20. Verfahren zum Betreiben einer einstellbaren Pedalvorrichtung, welches folgende Schritte aufweist:
Bereitstellen einer einstellbaren Pedalkonstruktion, welche einen Aufbau enthält, der einen virtuellen Drehpunkt (56) festlegt und eine Pedalkonstruktion, die für eine Bewegung um den virtuellen Drehpunkt (56) gelagert ist; und
Schwenken der Pedalkonstruktion um den virtuellen Drehpunkt (56), wobei der Aufbau eine Spur (27) enthält und die Pedalkonstruktion ein Gleitstück (28) enthält, das in die Spur (27) wirksam eingreift, und auch eine Pedalplatte (29) enthält, und wobei ein Bewegungsverhältnis der Pedalplatte (29) zu dem Gleitstück (28) 2:1 ist, wenn die Pedalkonstruktion um den virtuellen Drehpunkt (56) geschwenkt wird; wobei das Gleitstück (28) eine Zahnreihe (45) enthält, und wobei der Einstellmechanismus (26) einen dreidimensionalen einteiligen Körper (34) enthält, der eine erste Seite der Spur (27) festlegt, und einteilig geformte Flansche (35, 36), die eine andere Seite der Spur (27) formen, wobei der Einstellmechanismus (26) ein Getriebe enthält und der Körper weiters ein Fenster (40) enthält, zum Aufnehmen und wirksam Unterstützen des Getriebes, das der Spur (27) benachbart ist, so dass das Getriebe wirksam in die Zahnreihe (45) eingreift, um das Gleitstück (28) zu veranlassen, sich entlang der Spur (27) zu bewegen.

## Revendications

1. Dispositif de pédale réglable, comprenant :
une partie supérieure (24) adaptée pour être attachée à un support de véhicule (21);
une partie de levier inférieure (25) supportant une semelle de pédale (29); et
un mécanisme de réglage (26), reliant les parties supérieure et inférieure, le mécanisme de réglage (26) comprenant un piste courbe (27) et une pièce menée (28) s'engageant de façon coulissante dans la piste (27) pour définir un pivot virtuel (56) espacé de la piste (27) de sorte que la semelle de pédale (29) suit une voie prédéterminée lorsque la pièce menée (28) est réglé de façon coulissante le long de la piste courbe (27), dans lequel la pièce menée (28) parcourt une distance plus courte que la semelle de pédale (29) pendant le réglage du mécanisme de réglage (26); dans lequel la pièce menée (28) comporte une rangée de dents (45), le mécanisme de réglage (26) comprend un engrenage, et **caractérisé en ce que** le mécanisme de réglage (26) comprend un corps d'une seule pièce tridimensionnel (34) définissant un premier côté de la piste (27) et des épaulements formés intégralement (35, 36) formant un autre côté de la piste (27), le corps comprenant en outre une fenêtre (40) pour recevoir et supporter de façon opérationnelle l'engrenage à proximité de la piste (27) de sorte que l'engrenage engage la rangée de dents (45) de façon opérationnelle pour entraîner la pièce menée (28) à se déplacer le long de la piste (27).

2. Dispositif de pédale selon la revendication 1, dans lequel soit la partie supérieure (24), soit le mécanisme de réglage (26) comprend un pivot pour supporter de façon pivotante la partie inférieure (25) et la semelle de pédale (29).

3. Dispositif de pédale selon la revendication 2, dans lequel la partie supérieure (24) comprend le pivot, et dans lequel le pivot est adapté pour supporter de façon pivotante un ensemble comprenant la partie supérieure (24), la partie inférieure (25) et le mécanisme de réglage (26).

4. Dispositif de pédale selon la revendication 1, dans lequel la piste courbe (27) est attachée à la partie supérieure (24) , et la pièce menée (28) est attaché à la partie inférieure (25).

5. Dispositif de pédale selon la revendication 1, dans lequel la piste courbe (27) comprend un corps comportant au moins un épaulement courbe (35, 36) définissant une section courbe de la piste (27).

6. Dispositif de pédale selon la revendication 5, dans lequel le au moins un épaulement courbe (35, 36) comprend des épaulements courbes opposés.

7. Dispositif de pédale selon la revendication 5, dans lequel la piste courbe (27) est allongée et comprend un canal courbe.

8. Dispositif de pédale selon la revendication 1 ou 5, dans lequel la piste courbe (27) définit un rayon qui est plus long qu'une hauteur verticale totale d'un ensemble des parties supérieure et inférieure.

9. Dispositif de pédale selon la revendication 1 ou 5, dans lequel un rapport de déplacement de la semelle de pédale (29) à la pièce menée (28) est de 2:1.

10. Dispositif de pédale selon la revendication 1, dans lequel le mécanisme de réglage (26) comporté une rangée de dents sur la pièce menée (28), et comprend en outre un mécanisme d'entraînement présentant un engrenage monté de façon opérationnelle sur la piste (27) et adapté pour être entraîné par un câble d'actionnement, l'engrenage engageant de façon opérationnelle la rangée de dents afin de mouvoir la pièce menée (28) sélectivement le long de la piste (27).

11. Dispositif de pédale selon la revendication 1, comprenant une deuxième partie supérieure adaptée pour être attachée au support de véhicule (21); une deuxième partie de levier inférieure supportant une deuxième semelle de pédale; et un deuxième mécanisme de réglage reliant les deuxièmes parties supérieure et inférieure, le deuxième mécanisme de réglage comprenant une deuxième piste et une deuxième pièce menée s'engageant de façon coulissante dans la deuxième piste.

12. Dispositif de pédale selon la revendication 11, dans lequel la deuxième piste définit un deuxième pivot virtuel espacé de la deuxième piste, de sorte que la deuxième semelle de pédale suit une deuxième voie prédéterminée lorsque la deuxième pièce menée est réglé de façon coulissante le long de la deuxième piste.

13. Dispositif de pédale selon la revendication 11, dans lequel la deuxième piste comprend des deuxièmes épaulements opposés définissant la deuxième piste, et dans lequel la deuxième pièce menée est en forme de chapeau et comprend des épaulements opposés comportant une matière de palier configurée pour engager de façon coulissante les épaulements opposés.

14. Dispositif de pédale selon la revendication 13, comprenant un câble d'entraînement reliant de façon opérationnelle les premier et deuxième mécanismes d'entraînement.

15. Dispositif de pédale selon la revendication 2, dans lequel les épaulements formés intégralement sont constitués d'une matière continue et contiguë du corps et forment une section transversale en forme de C avec le corps, la piste (27) étant une cavité s'étendant longitudinalement formée à l'intérieur de la section transversale en forme de C.

16. Dispositif de pédale selon la revendication 15, dans lequel le corps d'une seule pièce comprend une masse de matière solide pouvant être chauffée et écoulée sous une forme nette pratiquement terminée.

17. Dispositif de pédale selon la revendication 15, dans lequel le corps d'une seule pièce comprend une masse de matière solide pouvant être moulée ou coulée, et ensuite refroidie en une forme terminée.

18. Dispositif de pédale selon la revendication 15, dans lequel la piste (27) définit un rayon connu au moins aussi grand que la longueur de la partie inférieure (25).

19. Dispositif de pédale selon la revendication 15, dans lequel la piste (27) définit un rayon connu plus grand qu'une longueur totale de la partie inférieure (25) et de la partie supérieure et qui positionne le pivot virtuel (56) au-dessus de la partie supérieure (24).

20. Procédé pour commander un dispositif de pédale réglable, comprenant les étapes suivantes :
prévoir une structure de pédale réglable comprenant une structure définissant un pivot virtuel (56) et une structure de pédale supportée pour se déplacer autour du pivot virtuel (56); et
faire pivoter la structure de pédale autour du pivot virtuel (56), dans lequel la structure comprend une piste (27) et la structure de pédale comprenant une pièce menée (28) s'engageant de façon opérationnelle dans la piste (27) et comprenant en outre une semelle de pédale (29), et dans lequel un rapport de déplacement de la semelle de pédale (29) à la pièce menée (28) est de 2:1 lorsque la structure de pédale pivote autour du pivot virtuel (56); dans lequel la pièce menée (28) comporte une rangée de dents (45), et dans lequel le mécanisme de réglage (26) comprend un corps d'une seule pièce tridimensionnel (34) définissant un premier côté de la piste (27) et des épaulements formés intégralement (35, 36) formant un autre côté de la piste (27), le mécanisme de réglage (26) comprenant un engrenage, et le corps comprenant en outre une fenêtre (40) pour recevoir et supporter de façon opérationnelle l'engrenage à proximité de la piste (27) de sorte que l'engrenage engage de façon opérationnelle la rangée de dents (45) pour entraîner la pièce menée (28) à se déplacer le long de la piste (27).
